# EUROPÄISCHE PATENTSCHRIFT

(11) **EP 3 828 658 B1**
(45) Veröffentlichungstag und Bekanntmachung des Hinweises auf die Patenterteilung: **13.07.2022**
(21) Anmeldenummer: 19211898.2
(22) Anmeldetag: 27.11.2019
(51) Int. Cl.: G05D 1/02, G01S 19/10

(54) **VERFAHREN ZUM BESTIMMEN EINER ROBOTER-POSITION EINES AUTONOMEN MOBILEN GRÜNFLÄCHENBEARBEITUNGSROBOTERS AUF EINER ZU BEARBEITENDEN FLÄCHE, VERFAHREN ZUM BETREIBEN EINES AUTONOMEN MOBILEN GRÜNFLÄCHENBEARBEITUNGSROBOTERS AUF EINER ZU BEARBEITENDEN FLÄCHE UND GRÜNFLÄCHENBEARBEITUNGSSYSTEM**
METHOD FOR DETERMINING A ROBOT POSITION OF AN AUTONOMOUS MOBILE GREEN SPACE PROCESSING ROBOT ON A SURFACE TO BE PROCESSED, METHOD FOR OPERATING AN AUTONOMOUS MOBILE GREEN SPACE PROCESSING ROBOT ON A SURFACE TO BE PROCESSED AND GREEN SPACE PROCESSING SYSTEM
PROCEDE DE DETERMINATION DE LA POSITION D'UN ROBOT MOBILE AUTONOME DE TRAITEMENT D'ESPACES VERTS SUR UNE SURFACE A TRAITER, PROCEDE DE FONCTIONNEMENT D'UN ROBOT MOBILE AUTONOME DE TRAITEMENT D'ESPACES VERTS SUR UNE SURFACE A TRAITER ET SYSTEME DE TRAITEMENT D'ESPACES VERTS

(43) Veröffentlichungstag der Anmeldung: 02.06.2021
(73) Patentinhaber: Andreas Stihl AG & Co. KG, 71336 Waiblingen (DE)
(72) Erfinder: Mittmann, Ulrich, 82319 Starnberg (DE); Dr. Henkel, Patrick, 82275 Emmering (DE); Strohmaier, Andreas, 71554 Weissach (DE); Krämer, Sebastian, 6020 Innsbruck (AT); van Zutven, Petrus, Dr., 6020 Innsbruck (AT)
(74) Vertreter: Patentanwälte Ruff, Wilhelm, Beier, Dauster & Partner mbB

(56) Entgegenhaltungen:
- EP-A1- 2 287 698
- EP-A1- 3 557 355
- CH-A2- 705 178

## Beschreibung

### ANWENDUNGSGEBIET UND STAND DER TECHNIK

Die Erfindung bezieht sich auf ein Verfahren zum Bestimmen einer Roboter-Position eines autonomen mobilen Grünflächenbearbeitungsroboters auf einer zu bearbeitenden Fläche, ein Verfahren zum Betreiben eines autonomen mobilen Grünflächenbearbeitungsroboters auf einer zu bearbeitenden Fläche aufweisend ein solches Verfahren zum Bestimmen einer Roboter-Position des Grünflächenbearbeitungsroboters auf der Fläche und ein Grünflächenbearbeitungssystem zum Bestimmen einer, insbesondere der, Roboter-Position eines, insbesondere des, autonomen mobilen Grünflächenbearbeitungsroboters auf einer, insbesondere der, zu bearbeitenden Fläche.

Die EP 2 287 698 A1 offenbart ein Verfahren zum Schätzen einer Position eines Fahrzeugs und mindestens eines Ziels in einer Umgebung, wobei das Verfahren ein Berechnen eines Zustandsvektors umfasst, der definiert ist durch: einen Vektor, der eine Position des Fahrzeugs in Bezug auf einen Ursprung eines globalen Koordinatenbezugssystems darstellt: einen Vektor, der eine geschätzte Position des mindestens einen Ziels in Bezug auf einen Ursprung eines geschätzten lokalen Koordinatenbezugssystems darstellt, und eine Fehlerzustandsform basierend auf einer Differenz zwischen dem Ursprung des geschätzten lokalen Koordinatenbezugssystem und einem Ursprung eines korrekturfreien lokalen Koordinatenbezugssystems, in dem eine Position des Fahrzeugs als fehlerfrei angenommen wird. Das Verfahren umfasst ein Implementieren eines Algorithmus vom SLAM-Typ und ein Empfangen eines GPS-Ortungssignals.

Die CH 705 178 A2 betrifft ein autonomes mobiles Mehrzweckgerät bestehend aus einer Empfangseinheit zum Empfang von Global-Positioning-Satellite-Daten, einem oder mehreren Modulen zum Empfang von weiteren Daten und einem oder mehreren Arbeitsgeräten sowie einer Verarbeitungs- und Steuereinheit, welche aus den empfangenen Satellitendaten und den weiteren Daten eine Position des Mehrzweckgeräts ermittelt. Daraus wird ein optimaler Bewegungsablauf und Fahrroute für den Einsatz des Arbeitsgeräts bestimmt. Das mobile Mehrzweckgerät ist mit einem oder mehreren Daten-Sendern zu einem System kombiniert.

### AUFGABE UND LÖSUNG

Der Erfindung liegt als Aufgabe die Bereitstellung eines Verfahrens zum Bestimmen einer Roboter-Position eines autonomen mobilen Grünflächenbearbeitungsroboters auf einer zu bearbeitenden Fläche und eines Grünflächenbearbeitungssystems zum Bestimmen einer, insbesondere der, Roboter-Position eines, insbesondere des, autonomen mobilen Grünflächenbearbeitungsroboters auf einer, insbesondere der, zu bearbeitenden Fläche zugrunde, das jeweils verbesserte Eigenschaften aufweist. Des Weiteren liegt der Erfindung als Aufgabe die Bereitstellung eines Verfahrens zum Betreiben eines autonomen mobilen Grünflächenbearbeitungsroboters auf einer zu bearbeitenden Fläche aufweisend ein solches Verfahren zum Bestimmen einer Roboter-Position des Grünflächenbearbeitungsroboters auf der Fläche zugrunde.

Die Erfindung löst diese Aufgabe durch die Bereitstellung eines Verfahrens mit den Merkmalen des Anspruchs 1, eines Verfahrens mit den Merkmalen des Anspruchs 9 und eines Grünflächenbearbeitungssystems mit den Merkmalen des Anspruchs 10. Vorteilhafte Weiterbildungen und/oder Ausgestaltungen der Erfindung sind in den abhängigen Ansprüchen beschrieben.

Das erfindungsgemäße Verfahren ist zum, insbesondere automatischen, Bestimmen einer Roboter-Position eines autonomen mobilen Grünflächenbearbeitungsroboters auf einer zu bearbeitenden Fläche ausgebildet bzw. konfiguriert. Das Verfahren weist die Schritte auf: a) Bestimmen, insbesondere automatisches Bestimmen, mindestens einer, insbesondere globalen, Roboter-Position des autonomen mobilen Grünflächenbearbeitungsroboters, insbesondere auf der zu bearbeitenden Fläche, mittels, insbesondere automatischen, Empfangens von mindestens einem globalen Positionsbestimmungs-Signal eines globalen Positionsbestimmungssystems durch den Grünflächenbearbeitungsroboter. b) Bestimmen, insbesondere automatisches Bestimmen, für mindestens eine lokale Positionsbestimmungs-Station eine, insbesondere zugehörige und/oder globale, Stations-Position basierend auf der mindestens einen bestimmten, insbesondere globalen, Roboter-Position und mittels, insbesondere automatischen, Austauschens mindestens eines lokalen Positionsbestimmungs-Signals zwischen dem Grünflächenbearbeitungsroboter, insbesondere an der mindestens einen bestimmten Roboter-Position, und der mindestens einen Positionsbestimmungs-Station. c) Bestimmen, insbesondere automatisches Bestimmen, einer, insbesondere verschiedenen und/oder lokalen, Roboter-Position des Grünflächenbearbeitungsroboters auf der zu bearbeitenden Fläche basierend auf der mindestens einen bestimmten Stations-Position und mittels, insbesondere automatischen, Austauschens mindestens eines lokalen Positionsbestimmungs-Signals zwischen dem Grünflächenbearbeitungsroboter, insbesondere an der zu bestimmenden Roboter-Position, und der mindestens einen Positionsbestimmungs-Station.

Das Verfahren, insbesondere der Schritt c), ermöglicht die Roboter-Position mittels der mindestens einen Positionsbestimmungs-Station zu bestimmen, falls dies mittels des Schritts a) bzw. des globalen Positionsbestimmungssystems nicht ermöglicht ist. Dies kann der Fall sein in mindestens einem Bereich der Fläche, in welchem der Grünflächenbearbeitungsroboter das mindestens eine globale Positionsbestimmungs-Signal, insbesondere in einer Mindestqualität, nicht, insbesondere zum Positions-Bestimmen ausreichend, empfangen kann bzw. welcher durch das globale Positionsbestimmungssystem nicht, insbesondere zum Positions-Bestimmen ausreichend, abgedeckt sein kann. Insbesondere kann in dem mindestens einen Bereich das mindestens eine globale Positionsbestimmungs-Signal durch ein Objekt an einem Begrenzungsrand der Fläche und/oder auf der Fläche abgeschattet bzw. abgeschirmt oder verfälscht sein. Somit ermöglicht das Verfahren, insbesondere ermöglichen die Schritte a) und c), ein Positions-Bestimmen in allen Bereichen der Fläche bzw. eine vollständige Abdeckung der Fläche, insbesondere in einer Mindestqualität. Somit ermöglicht dies ein autonomes Bearbeiten der vollständigen Fläche mittels des Grünflächenbearbeitungsroboters bzw. in allen Bereichen.

Des Weiteren ermöglicht das Verfahren, insbesondere der Schritt b), die mindestens eine, insbesondere globale, Stations-Position basierend auf dem Schritt a) zu bestimmen bzw. zu kennen, falls dies mittels des Schritts a) bzw. des globalen Positionsbestimmungssystems ermöglicht ist. Dies kann der Fall sein in mindestens einem, insbesondere verschiedenen, Bereich der Fläche, in welchem der Grünflächenbearbeitungsroboter das mindestens eine globale Positionsbestimmungs-Signal, insbesondere in einer Mindestqualität und/oder zum Positions-Bestimmen ausreichend, empfangen kann bzw. welcher durch das globale Positionsbestimmungssystem, insbesondere zum Positions-Bestimmen ausreichend, abgedeckt sein kann. Somit ermöglicht der Schritt b) den Schritt c).

Autonom bearbeiten kann bedeuten, dass sich der Grünflächenbearbeitungsroboter auf der Fläche selbstständig, selbsttätig, selbstbestimmt, selbstgesteuert und/oder unabhängig von einem Benutzer bewegen und/oder agieren und/oder zumindest einen Parameter, wie insbesondere einen Streckenparameter, und/oder einen Umkehrpunkt auswählen kann. Zusätzlich oder alternativ kann autonom bearbeiten bedeuten, dass der Grünflächenbearbeitungsroboter selbstständig mit einem Bearbeiten beginnen und/oder das Bearbeiten beenden kann. Weiter zusätzlich oder alternativ braucht oder kann beim autonomen Bearbeiten der Grünflächenbearbeitungsroboter nicht durch den Benutzer gesteuert zu sein, insbesondere nicht ferngesteuert. In anderen Worten: bei dem autonomen Bearbeiten kann der Grünflächenbearbeitungsroboter insbesondere ohne menschliche Steuerung und/oder Führung bearbeiten. Weiter zusätzlich oder alternativ kann der Grünflächenbearbeitungsroboter als Serviceroboter und/oder Dienstleistungsroboter bezeichnet werden. Weiter zusätzlich oder alternativ kann der Grünflächenbearbeitungsroboter ein Bearbeitungswerkzeug aufweisen.

Die Fläche kann eine Freifläche, insbesondere ein unversiegelter Boden, oder eine Grünfläche sein, wie eine Wiese oder eine Rasenfläche.

Das mindestens eine globale Positionsbestimmungs-Signal und das mindestens eine lokale Positionsbestimmungs-Signal können verschieden sein.

Das globale Positionsbestimmungssystem und die mindestens eine Positionsbestimmungs-Station können verschieden sein.

Global kann als absolut bezeichnet werden. Zusätzlich oder alternativ kann lokal als relativ bezeichnet werden.

Das Austauschen kann berührungslos, insbesondere kabellos, sein.

Die mindestens eine Positionsbestimmungs-Station braucht oder kann das mindestens eine globale Positionsbestimmungs-Signal nicht, insbesondere unmittelbar bzw. ohne mittels des Grünflächenbearbeitungsroboters, zu empfangen.

Das Bestimmen der mindestens eine Roboter-Position und/oder der mindestens einen Stations-Position kann ein Bestimmen von Positionskoordinaten aufweisen.

Der Schritt b) kann zeitgleich mit und/oder zeitlich nach dem Schritt a) ausgeführt werden. Zusätzlich oder alternativ kann der Schritt c) zeitlich nach dem Schritt b) ausgeführt werden. Weiter zusätzlich oder alternativ kann der Schritt a) wiederholt werden, insbesondere zeitgleich mit und/oder zeitlich nach dem Schritt b) und/oder zeitlich nach dem Schritt c). Weiter zusätzlich oder alternativ kann der Schritt b) wiederholt werden, insbesondere zeitgleich mit und/oder zeitlich nach dem Schritt a) und/oder zeitlich nach dem Schritt c). Weiter zusätzlich oder alternativ kann der Schritt c) wiederholt werden, insbesondere zeitlich nach dem Schritt a) und/oder dem Schritt b). Weiter zusätzlich oder alternativ kann zu einem Zeitpunkt entweder der Schritt a) oder der Schritt c) ausgeführt werden.

Der Grünflächenbearbeitungsroboter weist, insbesondere mindestens einen, insbesondere elektrischen und/oder mindestens zwei, GNSS-Empfänger (GNSS: Globales Navigations-Satelliten-System) auf. Der Schritt a) weist auf: Bestimmen der Roboter-Position mittels Empfangens von globalen Positionsbestimmungs-Signalen, insbesondere des globalen Positionsbestimmungssystems in Form, eines GNSS durch den GNSS-Empfänger. Insbesondere kann das GNSS NAVSTAR GPS, GLONASS, Galileo und/oder BeiDou aufweisen, insbesondere sein. Zusätzlich oder alternativ kann das GNSS Satelliten, insbesondere und Pseudoliten, aufweisen. Insbesondere kann Pseudolit terrestrischer Sender bedeuten, wobei der Pseudolit bzw. terrestrische Sender ein Signal aussenden kann, das dasjenige eines Satelliten nachahmen kann. Zusätzlich oder alternativ kann das GNSS ein D-GNSS (D-GNSS: Differential-GNSS), insbesondere ein D-GPS (D-GPS: Differential-GPS) und/oder ein rtk-GNSS, sein. Weiter zusätzlich oder alternativ können die globalen Positionsbestimmungs-Signale Funk-Signale aufweisen, insbesondere sein. Weiter zusätzlich oder alternativ braucht oder kann die mindestens eine Positionsbestimmungs-Station keinen GNSS-Empfänger aufzuweisen.

Der Schritt a) wird ausgeführt, falls der GNSS-Empfänger globale Positionsbestimmungs-Signale in einer Mindestqualität von einer Mindestanzahl, insbesondere zum Positions-Bestimmen, von, insbesondere vier, GNSS-Sendern des GNSS gleichzeitig empfängt.

Zusätzlich wird der Schritt c) ausgeführt, falls der GNSS-Empfänger keine globalen Positionsbestimmungs-Signale in der Mindestqualität von der Mindestanzahl, insbesondere zum Positions-Bestimmen, von, insbesondere vier, GNSS-Sendern des GNSS gleichzeitig empfängt.

Insbesondere kann zu einem Zeitpunkt der GNSS-Empfänger entweder globale Positionsbestimmungs-Signale in der Mindestqualität von der Mindestanzahl von GNSS-Sendern oder keine globalen Positionsbestimmungs-Signale in der Mindestqualität von der Mindestanzahl von GNSS-Sendern gleichzeitig empfangen. Insoweit, insbesondere bezüglich der Mindestqualität und/oder der Mindestanzahl, sei auch auf die einschlägige Fachliteratur verwiesen.

In einer Ausgestaltung der Erfindung weist der Schritt c) auf: Bestimmen der Roboter-Position mittels Empfangens von globalen Positionsbestimmungs-Signalen des GNSS durch den GNSS-Empfänger, falls der GNSS-Empfänger globale Positionsbestimmungs-Signale, insbesondere in der Mindestqualität, des GNSS empfängt. Dies ermöglicht ein genaueres Bestimmen der Roboter-Position. Insbesondere kann der GNSS-Empfänger globale Positionsbestimmungs-Signale, insbesondere in der Mindestqualität, von weniger als der Mindestanzahl, aber mehr als Null GNSS-Sendern gleichzeitig empfangen.

In einer Weiterbildung der Erfindung weist der Schritt b) auf: Bestimmen der, insbesondere mindestens einen, Stations-Position mittels, insbesondere automatischen, Messens mindestens einer Entfernung und/oder mindestens einer Richtung zwischen dem Grünflächenbearbeitungsroboter und der, insbesondere mindestens einen, Positionsbestimmungs-Station basierend auf dem mindestens einen ausgetauschten lokalen Positionsbestimmungs-Signal.

Zusätzlich oder alternativ weist der Schritt c) auf: Bestimmen der Roboter-Position mittels, insbesondere automatischen, Messens mindestens einer Entfernung und/oder mindestens einer Richtung zwischen dem Grünflächenbearbeitungsroboter und der mindestens einen Positionsbestimmungs-Station basierend auf dem mindestens einen ausgetauschten lokalen Positionsbestimmungs-Signal.

Insbesondere kann das Messen der mindestens einen Entfernung mittels Messens einer Laufzeit des mindestens einen ausgetauschten lokalen Positionsbestimmungs-Signals erfolgen.

In einer Weiterbildung der Erfindung weist der Schritt a) auf: Bestimmen von, insbesondere drei, verschiedenen Roboter-Positionen. Der Schritt b) weist auf: Bestimmen der, insbesondere mindestens einen, Stations-Position basierend auf den verschiedenen bestimmten Roboter-Positionen und mittels Lateration, insbesondere mindestens Trilateration, und/oder Angulation, insbesondere Triangulation, basierend auf den verschiedenen ausgetauschten lokalen Positionsbestimmungs-Signalen.

Zusätzlich oder alternativ weist der Schritt b) auf: Bestimmen für, insbesondere drei, verschiedene Positionsbestimmungs-Stationen, insbesondere drei, verschiedene Stations-Positionen. Der Schritt c) weist auf: Bestimmen der Roboter-Position basierend auf den verschiedenen bestimmten Stations-Positionen und mittels Lateration, insbesondere mindestens Trilateration, und/oder Angulation, insbesondere Triangulation, basierend auf den verschiedenen ausgetauschten lokalen Positionsbestimmungs-Signalen.

Insbesondere kann die Lateration basierend auf gemessenen Entfernungen erfolgen. Zusätzlich oder alternativ kann die Angulation basierend auf gemessenen Richtungen erfolgen. Weiter zusätzlich oder alternativ können die verschiedenen Roboter-Positionen mittels Bewegens des Grünflächenbearbeitungsroboters erreicht werden. Weiter zusätzlich oder alternativ können die Positionsbestimmungs-Stationen verschiedene Kennzeichnungen zur Unterscheidbarkeit, insbesondere durch den Grünflächenbearbeitungsroboter aufweisen.

In einer Weiterbildung der Erfindung weist das Austauschen des, insbesondere mindestens einen, lokalen Positionsbestimmungs-Signals auf: Senden, insbesondere automatisches Senden, des lokalen Positionsbestimmungs-Signals von dem Grünflächenbearbeitungsroboter und Empfangen, insbesondere automatisches Empfangen, des gesendeten lokalen Positionsbestimmungs-Signals von der Positionsbestimmungs-Station.

Zusätzlich oder alternativ weist das Austauschen des, insbesondere mindestens einen, lokalen Positionsbestimmungs-Signals auf: Senden, insbesondere automatisches Senden, des lokalen Positionsbestimmungs-Signals von dem Grünflächenbearbeitungsroboter, Reflektieren, insbesondere automatisches Reflektieren, des gesendeten lokalen Positionsbestimmungs-Signals von der Positionsbestimmungs-Station und Empfangen, insbesondere automatisches Empfangen, des reflektierten lokalen Positionsbestimmungs-Signals von dem Grünflächenbearbeitungsroboter.

Weiter zusätzlich oder alternativ weist das Austauschen des, insbesondere mindestens einen, lokalen Positionsbestimmungs-Signals auf: Senden, insbesondere automatisches Senden, des lokalen Positionsbestimmungs-Signals von der Positionsbestimmungs-Station und Empfangen, insbesondere automatisches Empfangen, des gesendeten lokalen Positionsbestimmungs-Signals von dem Grünflächenbearbeitungsroboter.

Weiter zusätzlich oder alternativ weist das Austauschen des, insbesondere mindestens einen, lokalen Positionsbestimmungs-Signals auf: Senden, insbesondere automatisches Senden, des lokalen Positionsbestimmungs-Signals von der Positionsbestimmungs-Station, Reflektieren, insbesondere automatisches Reflektieren, des gesendeten lokalen Positionsbestimmungs-Signals von dem Grünflächenbearbeitungsroboter und Empfangen, insbesondere automatisches Empfangen, des reflektierten lokalen Positionsbestimmungs-Signals von der Positionsbestimmungs-Station.

Insbesondere können/kann der Grünflächenbearbeitungsroboter und/oder die mindestens eine Positionsbestimmungs-Station, insbesondere jeweils, einen LPS-Sender (LPS: lokales Positionsbestimmungssystem) zum Senden, einen LPS-Reflektor, insbesondere einen LPS-Transponder, zum Reflektieren und/oder einen LPS-Empfänger zum Empfangen des lokalen Positionsbestimmungs-Signals aufweisen.

Das lokale Positionsbestimmungs-Signal kann ein optisches oder akustisches Signal aufweisen, insbesondere ein optisches oder akustisches Signal sein.

In einer Weiterbildung der Erfindung weist das lokale Positionsbestimmungs-Signal ein Funk-Signal auf, insbesondere ist ein Funk-Signal. Insbesondere können/kann der Grünflächenbearbeitungsroboter und/oder die mindestens eine Positionsbestimmungs-Station, insbesondere jeweils, einen Funk-Sender zum Senden, einen Funk-Reflektor, insbesondere einen Funk-Transponder, zum Reflektieren und/oder einen Funk-Empfänger zum Empfangen des Funk-Signals aufweisen. Insbesondere kann die mindestens eine Positionsbestimmungs-Station, insbesondere jeweils, als Funkleuchtturm (Englisch: Beacon) und/oder lokaler Positionsbestimmungs-Transmitter bezeichnet werden. Zusätzlich oder alternativ kann das Funk-Signal elektromagnetische Wellen oder Schwingungen im Radiofrequenzbereich aufweisen oder sein. Das Funk-Signal kann ein Ultrabreitband-Signal (UWB-Signal), ein Bluetooth-Signal und/oder ein WLAN-Signal bzw. WiFi-Signal aufweisen oder sein.

In einer Weiterbildung der Erfindung ist der Grünflächenbearbeitungsroboter als ein Rasenmähroboter mit einem Rasenmähwerkzeug ausgebildet bzw. konfiguriert. Insbesondere kann der Grünflächenbearbeitungsroboter als ein Mulchmähroboter ausgebildet sein. Zusätzlich oder alternativ kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn umfassen. Weiter zusätzlich oder alternativ kann das Rasenmähwerkzeug als ein rotierendes Rasenmähwerkzeug und dazu ausgebildet sein, das zu mähende Gut im sogenannten Freischnittverfahren ohne Gegenschneide zu mähen, insbesondere durch Zentrifugalkraft des Rasenmähwerkzeugs einen Schneidvorgang zu erzeugen.

In einer Weiterbildung der Erfindung ist die mindestens eine lokale Positionsbestimmungs-Station an, insbesondere auf, einem Begrenzungsrand der Fläche und/oder auf der Fläche stationiert. Dies ermöglicht, dass der Grünflächenbearbeitungsroboter das mindestens eine lokale Positionsbestimmungs-Signal, insbesondere in einer Mindestqualität, in mindestens einem Bereich der Fläche empfangen kann, in welchem der Grünflächenbearbeitungsroboter das mindestens eine globale Positionsbestimmungs-Signal, insbesondere in einer Mindestqualität, nicht, insbesondere zum Positions-Bestimmen ausreichend, empfangen kann. Insbesondere kann an dem Begrenzungsrand maximal 10 Meter (m), insbesondere maximal 5 m, insbesondere maximal 2 m, insbesondere maximal 1 m, von dem Begrenzungsrand entfernt außerhalb der Fläche bedeuten. Zusätzlich oder alternativ kann der Begrenzungsrand durch eine Wand, einen Zaun, eine Hecke oder anders definiert sein.

Das globale Positionsbestimmungssystem, insbesondere ein Sender, insbesondere ein GNSS-Sender, des globalen Positionsbestimmungssystems, kann mehr als 10 m von dem Begrenzungsrand entfernt außerhalb der Fläche sein.

Das erfindungsgemäße Verfahren ist zum, automatischen, Betreiben eines, insbesondere des, autonomen mobilen Grünflächenbearbeitungsroboters auf einer, insbesondere der, zu bearbeitenden Fläche ausgebildet bzw. konfiguriert. Das Verfahren weist ein Verfahren wie zuvor beschrieben zum Bestimmen einer, insbesondere der, Roboter-Position des autonomen mobilen Grünflächenbearbeitungsroboters auf der zu bearbeitenden Fläche auf. Des Weiteren weist das Verfahren den Schritt auf: Steuern, insbesondere automatisches Steuern, eines Bewegens des Grünflächenbearbeitungsroboters auf der Fläche basierend auf der bestimmten, insbesondere globalen oder lokalen, Roboter-Position derart, dass der Grünflächenbearbeitungsroboter auf der Fläche bleibt, insbesondere innerhalb des Begrenzungsrands der Fläche. Insbesondere kann das Steuern zusätzlich basierend auf einer definierten Abfolge von Begrenzungsrand-Positionen, insbesondere Begrenzungsrand-Positionskoordinaten, des Begrenzungsrands erfolgen.

Das erfindungsgemäße Grünflächenbearbeitungssystem ist zum, insbesondere automatischen, Bestimmen einer, insbesondere der, Roboter-Position eines, insbesondere des, autonomen mobilen Grünflächenbearbeitungsroboters auf einer, insbesondere der, zu bearbeitenden Fläche, insbesondere zum Ausführen eines Verfahrens wie zuvor beschrieben, ausgebildet bzw. konfiguriert. Das Grünflächenbearbeitungssystem weist den autonomen mobilen Grünflächenbearbeitungsroboter aufweisend einen, insbesondere den, GNSS-Empfänger und, insbesondere die, mindestens eine lokale Positionsbestimmungs-Station auf. Des Weiteren ist das Grünflächenbearbeitungssystem zum, insbesondere automatischen, Bestimmen, insbesondere der, mindestens einer Roboter-Position des Grünflächenbearbeitungsroboters, insbesondere auf der zu bearbeitenden Fläche, mittels, insbesondere automatischen, Empfangens von, insbesondere dem, mindestens einem globalen Positionsbestimmungs-Signal eines, insbesondere des, globalen Positionsbestimmungssystems durch den Grünflächenbearbeitungsroboter aufweisend Bestimmen der Roboter-Position mittels Empfangens von globalen Positionsbestimmungs-Signalen eines, insbesondere des, GNSS durch den GNSS-Empfänger, falls der GNSS-Empfänger globale Positionsbestimmungs-Signale in einer, insbesondere der, Mindestqualität von einer, insbesondere der, Mindestanzahl von, insbesondere vier, GNSS-Sendern des GNSS gleichzeitig empfängt, ausgebildet bzw. konfiguriert. Außerdem ist das Grünflächenbearbeitungssystem zum, insbesondere automatischen, Bestimmen für die mindestens eine lokale Positionsbestimmungs-Station eine, insbesondere die, Stations-Position basierend auf der mindestens einen bestimmten Roboter-Position und mittels, insbesondere automatischen, Austauschens, insbesondere des, mindestens eines lokalen Positionsbestimmungs-Signals zwischen dem Grünflächenbearbeitungsroboter und der mindestens einen Positionsbestimmungs-Station ausgebildet bzw. konfiguriert. Weiter ist das Grünflächenbearbeitungssystem zum, insbesondere automatischen, Bestimmen einer, insbesondere der, Roboter-Position des Grünflächenbearbeitungsroboters auf der zu bearbeitenden Fläche basierend auf der mindestens einen bestimmten Stations-Position und mittels, insbesondere automatischen, Austauschens, insbesondere des, mindestens eines lokalen Positionsbestimmungs-Signals zwischen dem Grünflächenbearbeitungsroboter und der mindestens einen Positionsbestimmungs-Station, falls der GNSS-Empfänger keine globalen Positionsbestimmungs-Signale in der Mindestqualität von der Mindestanzahl von, insbesondere vier, GNSS-Sendern des GNSS gleichzeitig empfängt, ausgebildet bzw. konfiguriert. Das Grünflächenbearbeitungssystem kann dieselben Vorteile wie zuvor für das Verfahren beschrieben ermöglichen. Insbesondere können/kann der Grünflächenbearbeitungsroboter und/oder die mindestens eine Positionsbestimmungs-Station teilweise oder ganz wie zuvor für das Verfahren beschrieben ausgebildet sein.

In einer Weiterbildung weist das Grünflächenbearbeitungssystem eine, insbesondere elektrische, Steuereinrichtung auf. Die Steuereinrichtung ist zum, insbesondere automatischen, Steuern eines, insbesondere des, Bewegens des Grünflächenbearbeitungsroboters auf der Fläche basierend auf der bestimmten Roboter-Position derart, dass der Grünflächenbearbeitungsroboter auf der Fläche bleibt, ausgebildet bzw. konfiguriert. Insbesondere kann das Grünflächenbearbeitungssystem, insbesondere die Steuereinrichtung, zum Ausführen eines Verfahrens wie zuvor beschrieben zum Betreiben des Grünflächenbearbeitungsroboters auf der Fläche ausgebildet sein. Zusätzlich oder alternativ kann der Grünflächenbearbeitungsroboter die Steuereinrichtung aufweisen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Ansicht erfindungsgemäßer Verfahren und eines erfindungsgemäßen Grünflächenbearbeitungssystems aufweisend einen autonomen mobilen Grünflächenbearbeitungsroboters anhand einer Draufsicht auf eine mittels des Grünflächenbearbeitungsroboters der Fig. 1 zu bearbeitenden Fläche, und
- Fig. 2: eine schematische Ansicht des Grünflächenbearbeitungsroboters der Fig. 1 und eines globalen Positionsbestimmungssystems.

### DETAILLIERTE BESCHREIBUNG DER AUSFÜHRUNGSBEISPIELE

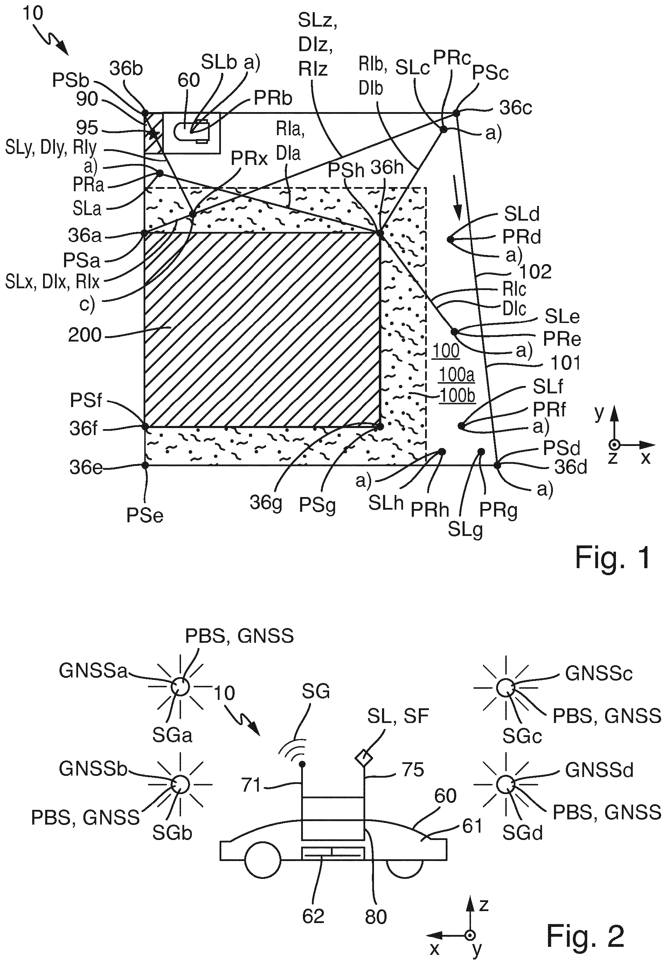

Fig. 1 und 2 zeigen ein erfindungsgemäßes Verfahren zum Betreiben eines autonomen mobilen Grünflächenbearbeitungsroboters 60 auf einer zu bearbeitenden Fläche 100. Das Verfahren weist ein Verfahren zum Bestimmen einer Roboter-Position PRa, PRb, PRc, PRd, PRe, PRf, PRg, PRh, PRx des Grünflächenbearbeitungsroboters 60 auf der Fläche 100 auf.

Das Verfahren zum Bestimmen der Roboter-Position PRa-h, PRx des Grünflächenbearbeitungsroboters 60 auf der Fläche 100 weist die Schritte auf: a) Bestimmen mindestens einer, insbesondere globalen, Roboter-Position PRa-h des Grünflächenbearbeitungsroboters 60, insbesondere auf der Fläche 100, mittels Empfangens von mindestens einem globalen Positionsbestimmungs-Signal SGa, SGb, SGc, SGd eines globalen Positionsbestimmungssystems PBS durch den Grünflächenbearbeitungsroboter 60. b) Bestimmen für mindestens eine lokale Positionsbestimmungs-Station 36a, 36b, 36c, 36d, 36e, 36f, 36g, 36h eine, insbesondere zugehörige und/oder globale, Stations-Position PSa, PSb, PSc, PSd, PSe, PSf, PSg, PSh basierend auf der mindestens einen bestimmten, insbesondere globalen, Roboter-Position PRa-h und mittels Austauschens mindestens eines lokalen Positionsbestimmungs-Signals SLa, SLb, SLc, SLd, SLe, SLf, SLg, SLh zwischen dem Grünflächenbearbeitungsroboter 60, insbesondere an der mindestens einen bestimmten Roboter-Position PRa-h, und der mindestens einen Positionsbestimmungs-Station 36a-h. c) Bestimmen einer, insbesondere verschiedenen und/oder lokalen, Roboter-Position PRx des Grünflächenbearbeitungsroboters 60 auf der zu bearbeitenden Fläche 100 basierend auf der mindestens einen bestimmten Stations-Position PSa-h und mittels Austauschens mindestens eines lokalen Positionsbestimmungs-Signals SLx, SLy, SLz zwischen dem Grünflächenbearbeitungsroboter 60, insbesondere an der zu bestimmenden Roboter-Position PRx, und der mindestens einen Positionsbestimmungs-Station 36a-h.

Des Weiteren zeigen Fig. 1 und 2 ein erfindungsgemäßes Grünflächenbearbeitungssystem 10 zum Bestimmen der Roboter-Position PRa-h, PRx des Grünflächenbearbeitungsroboters 60 auf der Fläche 100, insbesondere zum Ausführen eines Verfahrens wie zuvor beschrieben. Das Grünflächenbearbeitungssystem 10 weist den Grünflächenbearbeitungsroboter 60 und die mindestens eine lokale Positionsbestimmungs-Station 36a-h auf. Außerdem ist das Grünflächenbearbeitungssystem 10 zum Bestimmen der mindestens einen Roboter-Position PRa-h des Grünflächenbearbeitungsroboters 60, insbesondere auf der Fläche 100, mittels Empfangens von dem mindestens einen globalen Positionsbestimmungs-Signal SGa-d des globalen Positionsbestimmungssystems PBS durch den Grünflächenbearbeitungsroboter 60 ausgebildet. Weiter ist das Grünflächenbearbeitungssystem 10 zum Bestimmen für die mindestens eine lokale Positionsbestimmungs-Station 36a-h die Stations-Position PSa-h basierend auf der mindestens einen bestimmten Roboter-Position PRa-h und mittels Austauschens des mindestens einen lokalen Positionsbestimmungs-Signals SLa-h zwischen dem Grünflächenbearbeitungsroboter 60 und der mindestens einen Positionsbestimmungs-Station 36a-h ausgebildet. Weiter ist das Grünflächenbearbeitungssystem 10 zum Bestimmen der Roboter-Position PRx des Grünflächenbearbeitungsroboters 60 auf der Fläche 100 basierend auf der mindestens einen bestimmten Stations-Position PSa-h und mittels Austauschens des mindestens einen lokalen Positionsbestimmungs-Signals SLx-z zwischen dem Grünflächenbearbeitungsroboter 60 und der mindestens einen Positionsbestimmungs-Station 36a-h ausgebildet.

Im Detail weist der Grünflächenbearbeitungsroboter 60 einen GNSS-Empfänger 71 auf. Der Schritt a) weist auf: Bestimmen der Roboter-Position PRa-h mittels Empfangens von globalen Positionsbestimmungs-Signalen SGa-d eines GNSS durch den GNSS-Empfänger 71.

Insbesondere wird der Schritt a) ausgeführt, falls der GNSS-Empfänger 71 globale Positionsbestimmungs-Signale SGa-d in einer Mindestqualität von einer Mindestanzahl von, insbesondere vier, GNSS-Sendern GNSSa, GNSSb, GNSSc, GNSSd des GNSS gleichzeitig empfängt.

Im gezeigten Ausführungsbeispiel ist dies der Fall an der Roboter-Position PRa-h bzw. in einem, in Fig. 1 unmarkierten, Bereich 100a der Fläche 100. In anderen Worten: der Bereich 100a ist durch das globale Positionsbestimmungssystem PBS, insbesondere das GNSS, insbesondere zum Positions-Bestimmen ausreichend, abgedeckt.

Der Schritt c) wird ausgeführt, falls der GNSS-Empfänger 71 keine globalen Positionsbestimmungs-Signale SGa-d in der Mindestqualität von der Mindestanzahl von, insbesondere vier, GNSS-Sendern GNSSa-d des GNSS gleichzeitig empfängt.

Im gezeigten Ausführungsbeispiel ist dies der Fall an der Roboter-Position PRx bzw. in einem, in Fig. 1 gepunkteten, Bereich 100b der Fläche 100. In anderen Worten: der Bereich 100b ist durch das globale Positionsbestimmungssystem PBS, insbesondere das GNSS, nicht, insbesondere zum Positions-Bestimmen ausreichend, abgedeckt.

Insbesondere ist in dem Bereich 100b das mindestens eine globale Positionsbestimmungs-Signal SGc-d durch ein, in Fig. 1 schraffiertes, Objekt 200 in Form eines Gebäudes an einem Begrenzungsrand 101 der Fläche 100 abgeschattet.

Im Detail weist der Schritt c) auf: Bestimmen der Roboter-Position PRx mittels Empfangens von globalen Positionsbestimmungs-Signalen SGa-b des GNSS durch den GNSS-Empfänger 71, falls der GNSS-Empfänger 71 globale Positionsbestimmungs-Signale SGa-b, insbesondere in der Mindestqualität, des GNSS empfängt.

Im gezeigten Ausführungsbeispiel weist das GNSS Satelliten, insbesondere als GNSS-Sender GNSSa-d, auf. In alternativen Ausführungsbeispielen kann das GNSS zusätzlich Pseudoliten, insbesondere als GNSS-Sender, aufweisen.

Des Weiteren weist der Schritt b) auf: Bestimmen der, insbesondere mindestens einen, Stations-Position PSa-h mittels Messens mindestens einer Entfernung Dla, Dlb, Dlc und/oder mindestens einer Richtung Rla, Rlb, Rlc zwischen dem Grünflächenbearbeitungsroboter 60 und der, insbesondere mindestens einen, Positionsbestimmungs-Station 36a-h basierend auf dem mindestens einen ausgetauschten lokalen Positionsbestimmungs-Signal SLa-h.

Außerdem weist der Schritt c) auf: Bestimmen der Roboter-Position PRx mittels Messens mindestens einer Entfernung Dlx, Dly, Dlz und/oder mindestens einer Richtung Rlx, Rly, Rlz zwischen dem Grünflächenbearbeitungsroboter 60 und der mindestens einen Positionsbestimmungs-Station 36a-h basierend auf dem mindestens einen ausgetauschten lokalen Positionsbestimmungs-Signal SLx-z.

Weiter weist der Schritt a) auf: Bestimmen von, insbesondere drei, verschiedenen Roboter-Positionen PRa-h. Der Schritt b) weist auf: Bestimmen der, insbesondere mindestens einen, Stations-Position PSa-h basierend auf den verschiedenen bestimmten Roboter-Positionen PRa-h und mittels Lateration, insbesondere mindestens Trilateration, und/oder Angulation, insbesondere Triangulation, basierend auf den verschiedenen ausgetauschten lokalen Positionsbestimmungs-Signalen SLa-h.

Zudem weist der Schritt b) auf: Bestimmen für, insbesondere drei, verschiedene Positionsbestimmungs-Stationen 36a-h, insbesondere drei, verschiedene Stations-Positionen PSa-h. Der Schritt c) weist auf: Bestimmen der Roboter-Position PRx basierend auf den verschiedenen bestimmten Stations-Positionen PSa-h und mittels Lateration, insbesondere mindestens Trilateration, und/oder Angulation, insbesondere Triangulation, basierend auf den verschiedenen ausgetauschten lokalen Positionsbestimmungs-Signalen SLx-z.

Im gezeigten Ausführungsbeispiel werden im Schritt a) acht verschiedene Roboter-Positionen PRa-h bestimmt.

Im Schritt b) werden für acht verschiedene Positionsbestimmungs-Stationen 36a-h acht verschieden Stations-Positionen PSa-h bestimmt.

Beispielsweise wird im Schritt b) die Stations-Position PSh mittels Messens von drei Entfernungen Dla-c und/oder von drei Richtungen Rla-c zwischen dem Grünflächenbearbeitungsroboter 60, insbesondere an den drei bestimmten Roboter-Positionen PRa, PRc, PRe, und der Positionsbestimmungs-Station 36h basierend auf den drei bestimmten Roboter-Positionen PRa, PRc, PRe und den drei ausgetauschten lokalen Positionsbestimmungs-Signalen SLa, SLc, SLe und mittels Trilateration basierend auf den gemessenen Entfernungen Dla-c und/oder Triangulation basierend auf den gemessenen Richtungen Rla-c bestimmt.

Im Schritt c) wird die Roboter-Position PRx mittels Messens von drei Entfernungen Dlx-z und/oder von drei Richtungen Rlx-z zwischen dem Grünflächenbearbeitungsroboter 60, insbesondere an der zu bestimmenden Roboter-Position PRx, und den drei Positionsbestimmungs-Stationen 36a-c basierend auf den drei verschiedenen bestimmten Stations-Positionen PSa-c und den drei ausgetauschten lokalen Positionsbestimmungs-Signalen SLx-z und mittels Trilateration basierend auf den gemessenen Entfernungen Dlx-z und/oder Triangulation basierend auf den gemessenen Richtungen Rlx-z bestimmt.

In alternativen Ausführungsbeispielen kann mittels Messens entweder mindestens einer Entfernung oder mindestens einer Richtung bestimmt werden. Zusätzlich oder alternativ kann in alternativen Ausführungsbeispielen mittels entweder Lateration oder Angulation bestimmt werden.

Des Weiteren weist im gezeigten Ausführungsbeispiel das Austauschen des, insbesondere mindestens einen, lokalen Positionsbestimmungs-Signals SLa-h, SLx-z auf: Senden des lokalen Positionsbestimmungs-Signals SLa-h, SLx-z von der Positionsbestimmungs-Station 36a-h und Empfangen des gesendeten lokalen Positionsbestimmungs-Signals SLa-h, SLx-z von dem Grünflächenbearbeitungsroboter 60.

In alternativen Ausführungsbeispielen kann das Austauschen des lokalen Positionsbestimmungs-Signals aufweisen: Senden des lokalen Positionsbestimmungs-Signals von dem Grünflächenbearbeitungsroboter und Empfangen des gesendeten lokalen Positionsbestimmungs-Signals von der Positionsbestimmungs-Station, und/oder Senden des lokalen Positionsbestimmungs-Signals von dem Grünflächenbearbeitungsroboter, Reflektieren des gesendeten lokalen Positionsbestimmungs-Signals von der Positionsbestimmungs-Station und Empfangen des reflektierten lokalen Positionsbestimmungs-Signals von dem Grünflächenbearbeitungsroboter, und/oder Senden des lokalen Positionsbestimmungs-Signals von der Positionsbestimmungs-Station, Reflektieren des gesendeten lokalen Positionsbestimmungs-Signals von dem Grünflächenbearbeitungsroboter und Empfangen des reflektierten lokalen Positionsbestimmungs-Signals von der Positionsbestimmungs-Station.

Im gezeigten Ausführungsbeispiel weist die mindestens eine Positionsbestimmungs-Station 36a-h, insbesondere jeweils, einen LPS-Sender zum Senden des lokalen Positionsbestimmungs-Signals SLa-h, SLx-z auf. Der Grünflächenbearbeitungsroboter 60 weist einen LPS-Empfänger 75 zum Empfangen des lokalen Positionsbestimmungs-Signals SLa-h, SLx-z auf.

Außerdem weist das lokale Positionsbestimmungs-Signal SLa-h, SLx-z ein Funk-Signal SF auf, insbesondere ist ein Funk-Signal SF.

Weiter ist die mindestens eine lokale Positionsbestimmungs-Station 36a-h an, insbesondere auf, dem Begrenzungsrand 101 der Fläche 100 stationiert.

In alternativen Ausführungsbeispielen kann die mindestens eine lokale Positionsbestimmungs-Station auf der Fläche stationiert sein.

Im gezeigten Ausführungsbeispiel sind die Positionsbestimmungs-Stationen 36a-h, insbesondere in Form von LPS-Sendern und/oder Funkleuchttürmen, in Ecken der Fläche 100 stationiert. Somit spannen die Positionsbestimmungs-Stationen 36a-h, insbesondere in Form von LPS-Sendern und/oder Funkleuchttürmen, ein LPS auf.

Dies ermöglicht, dass der Grünflächenbearbeitungsroboter 60 das mindestens eine lokale Positionsbestimmungs-Signal SLx-z in dem Bereich 100b, insbesondere und in dem Bereich 100b bzw. in allen Bereichen, der, insbesondere vollständigen, Fläche 100 empfangen kann. In anderen Worten: der Bereich 100b, insbesondere und der Bereich 100a bzw. alle Bereiche bzw. die Fläche 100, ist durch die mindestens eine lokale Positionsbestimmungs-Station 36a-h, insbesondere das LPS, insbesondere zum Positions-Bestimmen ausreichend bzw. vollständig, abgedeckt.

Im gezeigten Ausführungsbeispiel weist das Grünflächenbearbeitungssystem 10 einen Referenz-GNSS-Empfänger 95 auf. Der Referenz-GNSS-Empfänger 95 ist stationär im Bereich der Fläche 100 angeordnet. Der GNSS-Empfänger 71 und der Referenz-GNSS-Empfänger 95 sind dazu ausgebildet, in Signalverbindung miteinander zu stehen, um eine relativ genaue Positionsbestimmung zu ermöglichen.

Zudem weist im gezeigten Ausführungsbeispiel das Grünflächenbearbeitungssystem 10 eine Basisstation 90 für den Grünflächenbearbeitungsroboter 60 auf. Insbesondere ist die Basisstation 90 an dem Begrenzungsrand 101 der Fläche 100 angeordnet. Im gezeigten Ausführungsbeispiel ist die Basisstation 90 als eine Ladestation zum Wiederaufladen eines Akkumulators des Grünflächenbearbeitungsroboters 60 ausgebildet.

Im Detail weist die Basisstation 90 den Referenz-GNSS-Empfänger 95 auf.

Des Weiteren weist das Grünflächenbearbeitungssystem 10 eine Steuereinrichtung 80 auf. Die Steuereinrichtung 80 ist zum Steuern eines Bewegens des Grünflächenbearbeitungsroboters 60 auf der Fläche 100 basierend auf der bestimmten Roboter-Position PRa-h, PRx derart, dass der Grünflächenbearbeitungsroboter 60 auf der Fläche 100 bleibt, insbesondere innerhalb des Begrenzungsrands 101 der Fläche 100, ausgebildet.

Im gezeigten Ausführungsbeispiel weist der Grünflächenbearbeitungsroboter 60 die Steuereinrichtung 80 auf.

Das Verfahren zum Betreiben Grünflächenbearbeitungsroboters 60 auf der Fläche 100 weist den Schritt auf: Steuern des Bewegens des Grünflächenbearbeitungsroboters 60 auf der Fläche 100 basierend auf der bestimmten Roboter-Position PRa-h, PRx derart, dass der Grünflächenbearbeitungsroboter 60 auf der Fläche 100 bleibt, insbesondere mittels der Steuereinrichtung 80.

Außerdem ist der Grünflächenbearbeitungsroboter 60 als ein Rasenmähroboter 61 mit einem Rasenmähwerkzeug 62 ausgebildet.

In alternativen Ausführungsbeispielen kann der Grünflächenbearbeitungsroboter eine inertiale Messeinheit (Englisch: inertial measurement unit, IMU) und/oder eine Odometrieeinheit, insbesondere als Backup, zum Bestimmen der Roboter-Position aufweisen.

Zusätzlich oder alternativ kann, falls mindestens eine Stations-Position für eine lokale Positionsbestimmungs-Stationen bestimmt ist, insbesondere falls mindestens drei Stations-Positionen für drei lokale Positionsbestimmungs-Stationen bestimmt sind, für mindestens eine weitere lokale Positionsbestimmungs-Station eine weitere Stations-Position basierend auf der mindestens einen bestimmten Stations-Position und mittels Austauschens mindestens eines lokalen Positionsbestimmungs-Signals zwischen der mindestens einen Positionsbestimmungs-Station und der mindestens einen weiteren Positionsbestimmungs-Station bestimmt werden, insbesondere im Schritt b).

Weiter zusätzlich oder alternativ können/kann in alternativen Ausführungsbeispielen die Schritte/der Schritt a) und/oder b) aufweisen: Bestimmen der Roboter-Position, einer Roboter-Geschwindigkeit des Grünflächenbearbeitungsroboters, einer Roboter-Ausrichtung des Grünflächenbearbeitungsroboters, einer GNSS-Phasenmehrdeutigkeit, eines Beschleunigungsbias und/oder eines Odometrie-Fehlers mittels eines Schätzverfahrens. Zusätzlich oder alternativ kann der Schritt b) aufweisen: Bestimmen der Stations-Position und deren quadrierter Norm mittels eines Kalman-Filters bzw. Kalman-Filter-Verfahrens. Insbesondere kann die Roboter-Ausrichtung als Quaternion bestimmt werden. Weiter zusätzlich oder alternativ kann das Schätzverfahren ein Kalman-Filter bzw. ein Kalman-Filter-Verfahren oder ein Extended Kalman-Filter bzw. ein Extended Kalman-Filter-Verfahren sein.

Wie die gezeigten und oben erläuterten Ausführungsbeispiele deutlich machen, stellt die Erfindung ein vorteilhaftes Verfahren zum Bestimmen einer Roboter-Position eines autonomen mobilen Grünflächenbearbeitungsroboters auf einer zu bearbeitenden Fläche und ein vorteilhaftes Grünflächenbearbeitungssystem zum Bestimmen einer, insbesondere der, Roboter-Position eines, insbesondere des, autonomen mobilen Grünflächenbearbeitungsroboters auf einer, insbesondere der, zu bearbeitenden Fläche bereit, das jeweils verbesserte Eigenschaften aufweist. Des Weiteren stellt die Erfindung ein vorteilhaftes Verfahren zum Betreiben eines autonomen mobilen Grünflächenbearbeitungsroboters auf einer zu bearbeitenden Fläche aufweisend ein solches Verfahren zum Bestimmen einer Roboter-Position des Grünflächenbearbeitungsroboters auf der Fläche bereit.

## Patentansprüche

1. Verfahren zum Bestimmen einer Roboter-Position (PRa-h, PRx) eines autonomen mobilen Grünflächenbearbeitungsroboters (60) auf einer zu bearbeitenden Fläche (100), wobei das Verfahren die Schritte aufweist:
a) Bestimmen mindestens einer Roboter-Position (PRa-h) des autonomen mobilen Grünflächenbearbeitungsroboters (60) mittels Empfangens von mindestens einem globalen Positionsbestimmungs-Signal (SGa-d) eines globalen Positionsbestimmungssystems (PBS) durch den Grünflächenbearbeitungsroboter (60),
b) Bestimmen für mindestens eine lokale Positionsbestimmungs-Station (36a-h) eine Stations-Position (PSa-h) basierend auf der mindestens einen bestimmten Roboter-Position (PRa-h) und mittels Austauschens mindestens eines lokalen Positionsbestimmungs-Signals (SLa-h) zwischen dem Grünflächenbearbeitungsroboter (60) und der mindestens einen Positionsbestimmungs-Station (36a-h), und
c) Bestimmen einer Roboter-Position (PRx) des Grünflächenbearbeitungsroboters (60) auf der zu bearbeitenden Fläche (100) basierend auf der mindestens einen bestimmten Stations-Position (PSa-h) und mittels Austauschens mindestens eines lokalen Positionsbestimmungs-Signals (SLx-z) zwischen dem Grünflächenbearbeitungsroboter (60) und der mindestens einen Positionsbestimmungs-Station (36a-h),
- wobei der Grünflächenbearbeitungsroboter (60) einen GNSS-Empfänger (71) aufweist, und
- wobei der Schritt a) aufweist: Bestimmen der Roboter-Position (PRa-h) mittels Empfangens von globalen Positionsbestimmungs-Signalen (SGa-d) eines GNSS (GNSS) durch den GNSS-Empfänger (71),
- wobei der Schritt a) ausgeführt wird, falls der GNSS-Empfänger (71) globale Positionsbestimmungs-Signale (SGa-d) in einer Mindestqualität von einer Mindestanzahl von, insbesondere vier, GNSS-Sendern (GNSSa-d) des GNSS (GNSS) gleichzeitig empfängt, und
- wobei der Schritt c) ausgeführt wird, falls der GNSS-Empfänger (71) keine globalen Positionsbestimmungs-Signale (SGa-d) in der Mindestqualität von der Mindestanzahl von, insbesondere vier, GNSS-Sendern (GNSSa-d) des GNSS (GNSS) gleichzeitig empfängt.

2. Verfahren nach Anspruch 1,
- wobei der Schritt c) aufweist: Bestimmen der Roboter-Position (PRx) mittels Empfangen von globalen Positionsbestimmungs-Signalen (SGa-b) des GNSS (GNSS) durch den GNSS-Empfänger (71), falls der GNSS-Empfänger (71) globale Positionsbestimmungs-Signale (SGa-b), insbesondere in der Mindestqualität, des GNSS (GNSS) empfängt.

3. Verfahren nach einem der vorhergehenden Ansprüche,
- wobei der Schritt b) aufweist: Bestimmen der Stations-Position (PSa-h) mittels Messens mindestens einer Entfernung (Dla-c) und/oder mindestens einer Richtung (Rla-c) zwischen dem Grünflächenbearbeitungsroboter (60) und der Positionsbestimmungs-Station (36a-h) basierend auf dem mindestens einen ausgetauschten lokalen Positionsbestimmungs-Signal (SLa-h), und/oder
- wobei der Schritt c) aufweist: Bestimmen der Roboter-Position (PRx) mittels Messens mindestens einer Entfernung (Dlx-z) und/oder mindestens einer Richtung (Rlx-z) zwischen dem Grünflächenbearbeitungsroboter (60) und der mindestens einen Positionsbestimmungs-Station (36a-h) basierend auf dem mindestens einen ausgetauschten lokalen Positionsbestimmungs-Signal (SLx-z).

4. Verfahren nach einem der vorhergehenden Ansprüche,
- wobei der Schritt a) aufweist: Bestimmen von, insbesondere drei, verschiedenen Roboter-Positionen (PRa-h), und wobei der Schritt b) aufweist: Bestimmen der Stations-Position (PSa-h) basierend auf den verschiedenen bestimmten Roboter-Positionen (PRa-h) und mittels Lateration, insbesondere mindestens Trilateration, und/oder Angulation, insbesondere Triangulation, basierend auf den verschiedenen ausgetauschten lokalen Positionsbestimmungs-Signalen (SLa-h), und/oder
- wobei der Schritt b) aufweist: Bestimmen für, insbesondere drei, verschiedene Positionsbestimmungs-Stationen (36a-h), insbesondere drei, verschiedene Stations-Positionen (PSa-h), und wobei der Schritt c) aufweist: Bestimmen der Roboter-Position (PRx) basierend auf den verschiedenen bestimmten Stations-Positionen (PSa-h) und mittels Lateration, insbesondere mindestens Trilateration, und/oder Angulation, insbesondere Triangulation, basierend auf den verschiedenen ausgetauschten lokalen Positionsbestimmungs-Signalen (SLx-z).

5. Verfahren nach einem der vorhergehenden Ansprüche,
- wobei das Austauschen des lokalen Positionsbestimmungs-Signals (SLa-h, x-z) aufweist:
- Senden des lokalen Positionsbestimmungs-Signals (SLa-h, x-z) von dem Grünflächenbearbeitungsroboter (60) und Empfangen des gesendeten lokalen Positionsbestimmungs-Signals (SLa-h, x-z) von der Positionsbestimmungs-Station (36a-h), und/oder
- Senden des lokalen Positionsbestimmungs-Signals (SLa-h, x-z) von dem Grünflächenbearbeitungsroboter (60), Reflektieren des gesendeten lokalen Positionsbestimmungs-Signals (SLa-h, x-z) von der Positionsbestimmungs-Station (36a-h) und Empfangen des reflektierten lokalen Positionsbestimmungs-Signals (SLa-h, x-z) von dem Grünflächenbearbeitungsroboter (60), und/oder
- Senden des lokalen Positionsbestimmungs-Signals (SLa-h, x-z) von der Positionsbestimmungs-Station (36a-h) und Empfangen des gesendeten lokalen Positionsbestimmungs-Signals (SLa-h, x-z) von dem Grünflächenbearbeitungsroboter (60), und/oder
- Senden des lokalen Positionsbestimmungs-Signals (SLa-h, x-z) von der Positionsbestimmungs-Station (36a-h), Reflektieren des gesendeten lokalen Positionsbestimmungs-Signals (SLa-h, x-z) von dem Grünflächenbearbeitungsroboter (60) und Empfangen des reflektierten lokalen Positionsbestimmungs-Signals (SLa-h, x-z) von der Positionsbestimmungs-Station (36a-h).

6. Verfahren nach einem der vorhergehenden Ansprüche,
- wobei das lokale Positionsbestimmungs-Signal (SLa-h, x-z) ein Funk-Signal (SF) aufweist, insbesondere ist.

7. Verfahren nach einem der vorhergehenden Ansprüche,
- wobei der Grünflächenbearbeitungsroboter (60) als ein Rasenmähroboter (61) mit einem Rasenmähwerkzeug (62) ausgebildet ist.

8. Verfahren nach einem der vorhergehenden Ansprüche,
- wobei die mindestens eine lokale Positionsbestimmungs-Station (36a-h) an einem Begrenzungsrand (101) der Fläche (100) und/oder auf der Fläche (100) stationiert ist.

9. Verfahren zum Betreiben eines autonomen mobilen Grünflächenbearbeitungsroboters (60) auf einer zu bearbeitenden Fläche (100),
- wobei das Verfahren ein Verfahren nach einem der vorhergehenden Ansprüche zum Bestimmen einer Roboter-Position (PRa-h, PRx) des autonomen mobilen Grünflächenbearbeitungsroboters (60) auf der zu bearbeitenden Fläche (100) aufweist, und
- wobei das Verfahren den Schritt aufweist: Steuern eines Bewegens des Grünflächenbearbeitungsroboters (60) auf der Fläche (100) basierend auf der bestimmten Roboter-Position (PRa-h, PRx) derart, dass der Grünflächenbearbeitungsroboter (60) auf der Fläche (100) bleibt.

10. Grünflächenbearbeitungssystem (10) zum Bestimmen einer Roboter-Position (PRa-h, PRx) eines autonomen mobilen Grünflächenbearbeitungsroboters (60) auf einer zu bearbeitenden Fläche (100), insbesondere zum Ausführen eines Verfahrens nach einem der vorhergehenden Ansprüche,
- wobei das Grünflächenbearbeitungssystem (10) aufweist:
- den autonomen mobilen Grünflächenbearbeitungsroboter (60) aufweisend einen GNSS-Empfänger (71), und
- mindestens eine lokale Positionsbestimmungs-Station (36a-h), und
- wobei das Grünflächenbearbeitungssystem (10)
- zum Bestimmen mindestens einer Roboter-Position (PRa-h) des Grünflächenbearbeitungsroboters (60) mittels Empfangens von mindestens einem globalen Positionsbestimmungs-Signal (SGa-d) eines globalen Positionsbestimmungssystems (PBS) durch den Grünflächenbearbeitungsroboter (60) aufweisend Bestimmen der Roboter-Position (PRa-h) mittels Empfangens von globalen Positionsbestimmungs-Signalen (SGa-d) eines GNSS (GNSS) durch den GNSS-Empfänger (71), falls der GNSS-Empfänger (71) globale Positionsbestimmungs-Signale (SGa-d) in einer Mindestqualität von einer Mindestanzahl von, insbesondere vier, GNSS-Sendern (GNSSa-d) des GNSS (GNSS) gleichzeitig empfängt,
- zum Bestimmen für die mindestens eine lokale Positionsbestimmungs-Station (36a-h) eine Stations-Position (PSa-h) basierend auf der mindestens einen bestimmten Roboter-Position (PRa-h) und mittels Austauschens mindestens eines lokalen Positionsbestimmungs-Signals (SLa-h) zwischen dem Grünflächenbearbeitungsroboter (60) und der mindestens einen Positionsbestimmungs-Station (36a-h), und
- zum Bestimmen einer Roboter-Position (PRx) des Grünflächenbearbeitungsroboters (60) auf der zu bearbeitenden Fläche (100) basierend auf der mindestens einen bestimmten Stations-Position (PSa-h) und mittels Austauschens mindestens eines lokalen Positionsbestimmungs-Signals (SLx-z) zwischen dem Grünflächenbearbeitungsroboter (60) und der mindestens einen Positionsbestimmungs-Station (36a-h), falls der GNSS-Empfänger (71) keine globalen Positionsbestimmungs-Signale (SGa-d) in der Mindestqualität von der Mindestanzahl von, insbesondere vier, GNSS-Sendern (GNSSa-d) des GNSS (GNSS) gleichzeitig empfängt, ausgebildet ist.

11. Grünflächenbearbeitungssystem (10) nach Anspruch 10, insbesondere zum Ausführen eines Verfahrens nach Anspruch 9, wobei das Grünflächenbearbeitungssystem (10) aufweist:
- eine Steuereinrichtung (80), wobei die Steuereinrichtung (80) zum Steuern eines Bewegens des Grünflächenbearbeitungsroboters (60) auf der Fläche (100) basierend auf der bestimmten Roboter-Position (PRa-h, PRx) derart, dass der Grünflächenbearbeitungsroboter (60) auf der Fläche (100) bleibt, ausgebildet ist.

## Claims

1. Method for determining a robot position (PRa-h, PRx) of an autonomous mobile green area maintenance robot (60) on an area (100) to be maintained, wherein the method has the steps of:
a) determining at least one robot position (PRa-h) of the autonomous mobile green area maintenance robot (60) by virtue of the green area maintenance robot (60) receiving at least one global positioning signal (SGa-d) from a global positioning system (PBS),
b) determining a station position (PSa-h) for at least one local positioning station (36a-h) on the basis of the at least one determined robot position (PRa-h) and by interchanging at least one local positioning signal (SLa-h) between the green area maintenance robot (60) and the at least one positioning station (36a-h), and
c) determining a robot position (PRx) of the green area maintenance robot (60) on the area (100) to be maintained on the basis of the at least one determined station position (PSa-h) and by interchanging at least one local positioning signal (SLx-z) between the green area maintenance robot (60) and the at least one positioning station (36a-h),
- wherein the green area maintenance robot (60) has a GNSS receiver (71), and
- wherein step a) comprises: determining the robot position (PRa-h) by virtue of the GNSS receiver (71) receiving global positioning signals (SGa-d) from a GNSS (GNSS),
- wherein step a) is carried out if the GNSS receiver (71) receives global positioning signals (SGa-d) of a minimum quality from a minimum number of GNSS transmitters (GNSSa-d), in particular four GNSS transmitters, of the GNSS (GNSS) at the same time, and
- wherein step c) is carried out if the GNSS receiver (71) does not receive any global positioning signals (SGa-d) of the minimum quality from the minimum number of GNSS transmitters (GNSSa-d), in particular four GNSS transmitters, of the GNSS (GNSS) at the same time.

2. Method according to Claim 1,
- wherein step c) comprises: determining the robot position (PRx) by virtue of the GNSS receiver (71) receiving global positioning signals (SGa-d) from the GNSS (GNSS) if the GNSS receiver (71) receives global positioning signals (SGa-d), in particular of the minimum quality, from the GNSS (GNSS).

3. Method according to one of the preceding claims,
- wherein step b) comprises: determining the station position (PSa-h) by measuring at least one distance (DIa-c) and/or at least one direction (RIa-c) between the green area maintenance robot (60) and the positioning station (36a-h) on the basis of the at least one interchanged local positioning signal (SLa-h), and/or
- wherein step c) comprises: determining the robot position (PRx) by measuring at least one distance (DIx-z) and/or at least one direction (RIx-z) between the green area maintenance robot (60) and the at least one positioning station (36a-h) on the basis of the at least one interchanged local positioning signal (SLx-z).

4. Method according to one of the preceding claims,
- wherein step a) comprises: determining different, in particular three different, robot positions (PRa-h), and wherein step b) comprises: determining the station position (PSa-h) on the basis of the different determined robot positions (PRa-h) and by means of lateration, in particular at least trilateration, and/or angulation, in particular triangulation, on the basis of the different interchanged local positioning signals (SLa-h), and/or
- wherein step b) comprises: determining different, in particular three different, station positions (PSa-h) for different, in particular three different, positioning stations (36a-h), and wherein step c) comprises: determining the robot position (PRx) on the basis of the different determined station positions (PSa-h) and by means of lateration, in particular at least trilateration, and/or angulation, in particular triangulation, on the basis of the different interchanged local positioning signals (SLx-z).

5. Method according to one of the preceding claims,
- wherein the interchanging of the local positioning signals (SLa-h, x-z) comprises:
- transmission of the local positioning signal (SLa-h, x-z) from the green area maintenance robot (60) and reception of the transmitted local positioning signal (SLa-h, x-z) by the positioning station (36a-h), and/or
- transmission of the local positioning signal (SLa-h, x-z) from the green area maintenance robot (60), reflection of the transmitted local positioning signal (SLa-h, x-z) by the positioning station (36a-h) and reception of the reflected local positioning signal (SLa-h, x-z) by the green area maintenance robot (60), and/or
- transmission of the local positioning signal (SLa-h, x-z) from the positioning station (36a-h) and reception of the transmitted local positioning signal (SLa-h, x-z) by the green area maintenance robot (60), and/or
- transmission of the local positioning signal (SLa-h, x-z) from the positioning station (36a-h), reflection of the transmitted local positioning signal (SLa-h, x-z) by the green area maintenance robot (60) and reception of the reflected local positioning signal (SLa-h, x-z) by the positioning station (36a-h).

6. Method according to one of the preceding claims,
- wherein the local positioning signal (SLa-h, x-z) has, in particular is, a radio signal (SF).

7. Method according to one of the preceding claims,
- wherein the green area maintenance robot (60) is designed as a lawnmower robot (61) having a lawnmower tool (62).

8. Method according to one of the preceding claims,
- wherein the at least one local positioning station (36a-h) is stationed at a boundary edge (101) of the area (100) and/or on the area (100).

9. Method for operating an autonomous mobile green area maintenance robot (60) on an area (100) to be maintained,
- wherein the method comprises a method according to one of the preceding claims for determining a robot position (PRa-h, PRx) of the autonomous mobile green area maintenance robot (60) on the area (100) to be maintained, and
- wherein the method has the step of: controlling a movement of the green area maintenance robot (60) on the area (100) on the basis of the determined robot position (PRa-h, PRx) in such a manner that the green area maintenance robot (60) remains on the area (100).

10. Green area maintenance system (10) for determining a robot position (PRa-h, PRx) of an autonomous mobile green area maintenance robot (60) on an area (100) to be maintained, in particular for carrying out a method according to one of the preceding claims,
- wherein the green area maintenance system (10) has:
- the autonomous mobile green area maintenance robot (60) having a GNSS receiver (71), and
- at least one local positioning station (36a-h), and
- wherein the green area maintenance system (10) is designed
- to determine at least one robot position (PRa-h) of the green area maintenance robot (60) by virtue of the green area maintenance robot (60) receiving at least one global positioning signal (SGa-d) from a global positioning system (PBS) comprising determining the robot position (PRa-h) by virtue of the GNSS receiver (71) receiving global positioning signals (SGa-d) from a GNSS (GNSS), if the GNSS receiver (71) receives global positioning signals (SGa-d) of a minimum quality from a minimum number of GNSS transmitters (GNSSa-d), in particular four GNSS transmitters, of the GNSS (GNSS) at the same time,
- to determine a station position (PSa-h) for the at least one local positioning station (36a-h) on the basis of the at least one determined robot position (PRa-h) and by interchanging at least one local positioning signal (SLa-h) between the green area maintenance robot (60) and the at least one positioning station (36a-h), and
- to determine a robot position (PRx) of the green area maintenance robot (60) on the area (100) to be maintained on the basis of the at least one determined station position (PSa-h) and by interchanging at least one local positioning signal (SLx-z) between the green area maintenance robot (60) and the at least one positioning station (36a-h), if the GNSS receiver (71) does not receive any global positioning signals (SGa-d) of the minimum quality from the minimum number of GNSS transmitters (GNSSa-d), in particular four GNSS transmitters, of the GNSS (GNSS) at the same time.

11. Green area maintenance system (10) according to Claim 10, in particular for carrying out a method according to Claim 9, wherein the green area maintenance system (10) has:
- a control device (80), wherein the control device (80) is designed to control a movement of the green area maintenance robot (60) on the area (100) on the basis of the determined robot position (PRa-h, PRx) in such a manner that the green area maintenance robot (60) remains on the area (100).

## Revendications

1. Procédé permettant de déterminer une position de robot (PRa-h, PRx) d'un robot de traitement d'espace vert (60), mobile et autonome, sur une surface à traiter (100), le procédé présentant les étapes consistant à :
a) déterminer au moins une position de robot (PRa-h) du robot de traitement d'espace vert (60), mobile et autonome, au moyen d'une réception d'au moins un signal de positionnement global (SGa-d) d'un système de positionnement global (PBS) par le robot de traitement d'espace vert (60),
b) déterminer pour au moins une station de positionnement locale (36a-h) une position de station (PSa-h) sur la base de ladite au moins une position de robot (PRa-h) déterminée, et au moyen d'un échange d'au moins un signal de positionnement local (SLa-h) entre le robot de traitement d'espace vert (60) et ladite au moins une station de positionnement (36a-h), et
c) déterminer une position de robot (PRx) du robot de traitement d'espace vert (60) sur la surface à traiter (100) sur la base de ladite au moins une position de station (PSa-h) déterminée et au moyen d'un échange d'au moins un signal de positionnement local (SLx-z) entre le robot de traitement d'espace vert (60) et ladite au moins une station de positionnement (36ah),
- le robot de traitement d'espace vert (60) présentant un récepteur GNSS (71), et
- l'étape a) consistant à : déterminer la position de robot (PRa-h) au moyen d'une réception de signaux de positionnement global (SGa-d) d'un GNSS (GNSS) par le récepteur GNSS (71),
- l'étape a) étant effectuée si le récepteur GNSS (71) reçoit en même temps des signaux de positionnement global (SGa-d) d'une qualité minimale à partir d'un nombre minimal d'émetteurs GNSS (GNSSa-d), en particulier quatre, du GNSS (GNSS), et
- l'étape c) étant effectuée si le récepteur GNSS (71) ne reçoit pas en même temps des signaux de positionnement global (SGa-d) de la qualité minimale à partir du nombre minimal d'émetteurs GNSS (GNSSa-d), en particulier quatre, du GNSS (GNSS).

2. Procédé selon la revendication 1,
- l'étape c) consistant à : déterminer la position de robot (PRx) au moyen d'une réception de signaux de positionnement global (SGa-b) du GNSS (GNSS) par le récepteur GNSS (71) si le récepteur GNSS (71) reçoit des signaux de positionnement global (SGa-b), en particulier de la qualité minimale, du GNSS (GNSS).

3. Procédé selon l'une quelconque des revendications précédentes,
- l'étape b) consistant à : déterminer la position de station (PSa-h) au moyen d'une mesure d'au moins une distance (Dla-c) et/ou d'au moins une direction (Rla-c) entre le robot de traitement d'espace vert (60) et la station de positionnement (36a-h) sur la base du au moins un signal de positionnement local (SLa-h) échangé, et/ou
- l'étape c) consistant à : déterminer la position de robot (PRx) au moyen d'une mesure d'au moins une distance (Dlx-z) et/ou d'au moins une direction (Rlx-z) entre le robot de traitement d'espace vert (60) et ladite au moins une station de positionnement (36a-h) sur la base du au moins un signal de positionnement local (SLx-z) échangé.

4. Procédé selon l'une quelconque des revendications précédentes,
- l'étape a) consistant à : déterminer différentes positions de robot (PRa-h), en particulier trois, et l'étape b) consistant à : déterminer la position de station (PSa-h) sur la base des différentes positions de robot (PRa-h) déterminées, et au moyen d'une latération, en particulier au moins d'une trilateration, et/ou d'une angulation, en particulier d'une triangulation, sur la base des différents signaux de positionnement locaux (SLa-h) échangés, et/ou
- l'étape b) consistant à : déterminer pour différentes stations de positionnement (36a-h), en particulier trois, différentes positions de station (PSa-h), en particulier trois, et l'étape c) consistant à : déterminer la position de robot (PRx) sur la base des différentes positions de station (PSa-h) déterminées, et au moyen d'une latération, en particulier au moins d'une trilateration, et/ou d'une angulation, en particulier d'une triangulation, sur la base des différents signaux de positionnement locaux (SLx-z) échangés.

5. Procédé selon l'une quelconque des revendications précédentes,
- l'échange du signal de positionnement local (SLa-h, x-z) consistant à :
- envoyer le signal de positionnement local (SLa-h, x-z) par le robot de traitement d'espace vert (60) et recevoir le signal de positionnement local (SLa-h, x-z) envoyé par la station de positionnement (36a-h), et/ou
- envoyer le signal de positionnement local (SLa-h, x-z) par le robot de traitement d'espace vert (60), renvoyer le signal de positionnement local (SLa-h, x-z) envoyé par la station de positionnement (36a-h) et recevoir le signal de positionnement local (SLa-h, x-z) renvoyé par le robot de traitement d'espace vert (60), et/ou
- envoyer le signal de positionnement local (SLa-h, x-z) par la station de positionnement (36a-h) et recevoir le signal de positionnement local (SLa-h, x-z) envoyé par le robot de traitement d'espace vert (60), et/ou
- envoyer le signal de positionnement local (SLa-h, x-z) par la station de positionnement (36a-h), renvoyer le signal de positionnement local (SLa-h, x-z) envoyé par le robot de traitement d'espace vert (60) et recevoir le signal de positionnement local (SLa-h, x-z) renvoyé par la station de positionnement (36a-h).

6. Procédé selon l'une quelconque des revendications précédentes,
- dans lequel le signal de positionnement local (SLa-h, x-z) présente, en particulier est, un signal radio (SF).

7. Procédé selon l'une quelconque des revendications précédentes,
- dans lequel le robot de traitement d'espace vert (60) est réalisé sous la forme d'un robot tondeuse (61) doté d'un outil de tonte (62).

8. Procédé selon l'une quelconque des revendications précédentes,
- dans lequel ladite au moins une station de positionnement locale (36a-h) est placée au niveau d'un bord de délimitation (101) de la surface (100) et/ou sur la surface (100).

9. Procédé permettant de faire fonctionner un robot de traitement d'espace vert (60), mobile et autonome, sur une surface à traiter (100),
- le procédé présentant un procédé selon l'une quelconque des revendications précédentes permettant de déterminer une position de robot (PRa-h, PRx) du robot de traitement d'espace vert (60), mobile et autonome, sur la surface à traiter (100), et
- le procédé présentant l'étape consistant à : commander un déplacement du robot de traitement d'espace vert (60) sur la surface (100) sur la base de la position de robot (PRa-h, PRx) déterminée de telle sorte que le robot de traitement d'espace vert (60) reste sur la surface (100).

10. Système de traitement d'espace vert (10) permettant de déterminer une position de robot (PRa-h, PRx) d'un robot de traitement d'espace vert (60), mobile et autonome, sur une surface à traiter (100), en particulier d'exécuter un procédé selon l'une quelconque des revendications précédentes,
- le système de traitement d'espace vert (10) présentant :
- le robot de traitement d'espace vert (60), mobile et autonome, qui présente un récepteur GNSS (71), et
- au moins une station de positionnement locale (36a-h), et
- le système de traitement d'espace vert (10) étant réalisé
- pour déterminer au moins une position de robot (PRa-h) du robot de traitement d'espace vert (60) au moyen d'une réception d'au moins un signal de positionnement global (SGa-d) d'un système de positionnement global (PBS) par le robot de traitement d'espace vert (60), consistant à déterminer la position de robot (PRa-h) au moyen d'une réception de signaux de positionnement global (SGa-d) d'un GNSS (GNSS) par le récepteur GNSS (71) si le récepteur GNSS (71) reçoit en même temps des signaux de positionnement global (SGa-d) d'une qualité minimale à partir d'un nombre minimal d'émetteurs GNSS (GNSSa-d), en particulier quatre, du GNSS (GNSS),
- pour déterminer pour ladite au moins une station de positionnement locale (36a-h) une position de station (PSa-h) sur la base de ladite au moins une position de robot (PRa-h) déterminée et au moyen d'un échange d'au moins un signal de positionnement local (SLa-h) entre le robot de traitement d'espace vert (60) et ladite au moins une station de positionnement (36ah), et
- pour déterminer une position de robot (PRx) du robot de traitement d'espace vert (60) sur la surface à traiter (100) sur la base de ladite au moins une position de station (PSa-h) déterminée et au moyen d'un échange d'au moins un signal de positionnement local (SLx-z) entre le robot de traitement d'espace vert (60) et ladite au moins une station de positionnement (36ah), si le récepteur GNSS (71) ne reçoit pas en même temps des signaux de positionnement global (SGa-d) de la qualité minimale à partir du nombre minimal d'émetteurs GNSS (GNSSa-d), en particulier quatre, du GNSS (GNSS).

11. Système de traitement d'espace vert (10) selon la revendication 10, en particulier pour exécuter un procédé selon la revendication 9, le système de traitement d'espace vert (10) présentant :
- un dispositif de commande (80), le dispositif de commande (80) étant réalisé pour commander un déplacement du robot de traitement d'espace vert (60) sur la surface (100) sur la base de la position de robot (PRa-h, PRx) déterminée de telle sorte que le robot de traitement d'espace vert (60) reste sur la surface (100).
